# EUROPEAN PATENT SPECIFICATION

(11) **EP 1 503 622 B1**
(45) Date of publication and mention of the grant of the patent: **26.11.2008**
(21) Application number: 02775658.4
(22) Date of filing: 10.10.2002
(51) Int. Cl.: A01K 61/00

(54) **FISH CULTURING PLANT AND METHOD FOR CULTURING FISH**
FISCHZUCHTANLAGE UND VERFAHREN
PISCICULTURE ET PROCEDE PISCICOLE

(30) Priority: 11.10.2001 SE 0103389
(43) Date of publication of application: 09.02.2005
(73) Proprietor: Karem, Dana, 118 66 Stockholm (SE)
(72) Inventor: Karem, Dana, 118 66 Stockholm (SE)
(86) International application number: PCT/SE2002/001850
(87) International publication number: WO 2003/037078

(56) References cited:
- US-A- 3 773 014
- US-A- 3 797 458
- US-A- 4 003 337
- US-A- 4 038 945
- US-A- 5 038 715
- US-A- 5 353 745

## Description

### Field of the Invention

From a first aspect, the present invention relates to a fish culturing plant comprising a basin having a number of sections where adjacent sections are delimited from each other by means of partition walls, and sealable openings are arranged in the partition walls so that adjacent sections are connectable with each other.

From a second aspect, the invention relates to a method for culturing fish wherein the fishes are cultured in a basin having a number of sections where adjacent sections are delimited from other by means of partition walls, and sealable openings are arranged in the partition walls so that adjacent sections are connectable with each other, fishes of different age groups being present in different sections and fishes of one age group being transferred from a section to an adjacent section by setting the interjacent opening in open position.

### Background of the Invention

Since long it is known to culture fish in ponds, basins, aquariums and the like. Although this in general results in a more economic production of fish for food than catching wild fish, plants for fish culturing may in many cases become costly and expensive to operate. One way of attaining an efficient culturing is to culture the fishes in a number of different basins or sections in such a plant, where in each section fishes of one and the same age group are cultured. These are then transferred from one section to another as they grow larger and demand more space, the size of the sections then being increased.

At such plants having a number of culturing sections it may be of great significance for attaining an economically efficient operation how the same sections are arranged in relation to each other and how the fishes are transferred from one section to another.

Examples of attempts at achieving fish culturing plants with the objective of attaining an efficient design in this regard are described in US 3 773 014, US 4 003 337 and US 5 038 715.

Thus, 3 773 014 describes a plant where a number of sections are positioned above each other in a basin tower, where the youngest fishes are cultured in the uppermost section and fishes of increasing age are cultured in the subjacent sections.

US 4 003 337 describes a plant having concentrically arranged annular sections parted by ring-shaped walls, with a shutter in each partition wall for transferring fishes from one section to another. The sections have a radially outwards increasing volume for culturing fishes of increasing age.

US 5 038 715 describes a plant having a large number of sections arranged in an intricate network.

Said previously known plants may from certain aspects enable an efficient culturing of fish. However, none of these plants are designed in a way being optimal from all aspects especially in respect of the interrelation of the sections and in regard of the communication between these for the transfer of fishes. Furthermore, the known plants do not permit ecological culturing of fish. Thus, there is a need of further enhancements.

### Description of the Invention

The object of the present invention is to accomplish a solution which meets this need of enhancements and that thus even further endeavour to optimise the design of the fish culturing plant by way of an efficient arranging of the sections in relation to each other and an efficient system for the transfer of fishes from one section to another, and to accomplish ecological culturing of fish.

This object has from a first aspect of the invention been attained by a fish culturing plant of the kind specified in the preamble of claim 1 comprising the special features that the sections are arranged consecutively in a helix-like pattern in a number of turns, that the partition walls comprise a helix-like running wall as well as a number of transverse walls, each transverse wall running between two adjacent turns of the helix-like running wall that the openings are arranged in the transverse walls that the plant is provided with a foddering appliance comprising a number of foddering positions where at least some of the dispensing spots are arranged so that dispensing of fodder is effected in the vicinity of each transverse wall, that the plant comprises a housing encompassing the basin so that it is secluded from the air and water of the surroundings and that the plant comprises a service tunnel running under the basin in which a pumping station is arranged for the pumping of water in and out of each section individually, the inlet and outlet of a section being situated at each end of the section, maintenance devices for the adjustment of quality and temperature of the water in each section individually and filtration and purification devices.

Here, helix-like is not to be understood merely as a circular helix, but also a helix which may assume, for instance, an oval, square, rectangular or another polygonal character.

By virtue of the helical shape of the plant with sectioning in the helical direction of consecutive sections, an efficient utilization at a low cost is obtained. Furthermore, by disposing the openings for transfer of fish from one section to another in the transverse walls, well defined transfer points are obtained positioned in such a way that inlet opening and outlet opening in a section will be at each end of the section, which facilitates keeping each group of fishes apart from those situated nearest. The well-defined sites of the transfer points furthermore facilitate to, by different means, make sure that you simply and safely can transfer a group of fishes from one section to the next. By having the dispensing spots positioned as mentioned the fishes may by means of dispensing from the same be enticed to swim over to the adjacent section. Thereby, a simple and reliable opportunity to transfer a group of fishes from one section to the subsequent is presented. Furthermore, such a transfer is very kind to the fishes.

By virtue of the basin being contained in housing which secludes it from surrounding air and water, it is attained that the fishes will neither be exposed to external biological influence or external pollutants nor that the fish culturing plant will contaminate the surroundings. By arranging a service tunnel situated under the basin, the different sections may in a simple way be reached within the system secluded from the surroundings. Furthermore, by the fact that the equipment for the operation of the plant is arranged in said tunnel, a saving of space is attained. The fact that the pumping station and other managing devices serve each section individually, permits that conditions can be created in each section that are adapted to the age group of fishes that is therein. The filtration and purification devices further contribute to a high hygienic level of the plant. The stated positioning of inlet and outlet for the individual sections ensures a controlled flowing-through of the water, so that a flow formation is formed which emulates natural conditions and which gives an improved mixing of oxygen. Together, these factors enable an ecological culturing of the fishes on a large scale without influence from the surroundings.

According to a preferred embodiment of the invented plant, the sections have different volume with increasing volume from within and outward, seen in the helical direction.

Thereby, the helical shape is utilized in order to achieve the increasing volume of the section, which fishes of increasing age demand.

According to yet a preferred embodiment, each sealable opening is arranged in the lower half of the transverse wall and may be closed by means of a vertically moving shutter.

By arranging the opening in the lower part of the wall, an efficient way to transfer the fishes even at different levels of the liquid surface is enabled. This may be especially advantageous in those cases liquid is pumped out or into some section in connection with the transfer. Furthermore, a vertically moving shutter enables a simple operation at opening and closing of the opening and minimizes the risk of damage to the fishes in connection with the manoeuvring.

The above-mentioned advantageous embodiments of the invented fish culturing plant are defined in the claims depending on claim 1.

The set up object has, from the second aspect of the invention, been attained by a method of the kind defined in the preamble of claim 4 comprising the special measures to arrange the sections consecutively in a helix-like pattern in a number of turns, that the fishes are transferred from one section to an adjacent section by opening an opening in a transverse wall interconnecting two adjacent turns of the helical walls of the sections, the fishes being induced to pass the respective opening by supplying fodder in the vicinity of the opening, that the basin is contained in a housing so that it is secluded from surrounding air and water so that water is pumped out and in individually in each section with a pumping station arranged in a service tunnel situated under the basin, the water being pumped in at one end of a section and out from the other end of the section, that the quality and the temperature of the water is adjusted in each section individually by means of maintenance devices situated in the service tunnel and that the water is filtered and purified.

By this method, advantages are attained of a kind similar to those attained with the invented plant and that have been accounted for above.

Preferred embodiments of the invented method are stated in the claims depending on claim 4. Advantages of a kind are gained with these embodiments that correspond to what is gained with the preferred embodiments of the invented fish culturing plant and that have been accounted for above.

The invention is closer described by the following detailed description of an advantageous embodiment example of the invented fish culturing plant, reference being made to the appended drawing figures.

### Brief Description of the Drawings

Fig 1 is a view from above of a fish culturing plant according to the invention.
Figs 2-8 are each a longitudinal section through a part of two adjacent sections of a basin of fig 1 and illustrating different steps in the transfer of fishes from one section to an adjacent.
Figs 9-15 are each a view from above of two adjacent sections of a basin of fig 1 and illustrate different steps in the transfer of fishes from one section to an adjacent.
Fig 16 illustrates partly in perspective view and partly in section a fish culturing plant according to fig 1.

### Description of Advantageous Embodiment Example

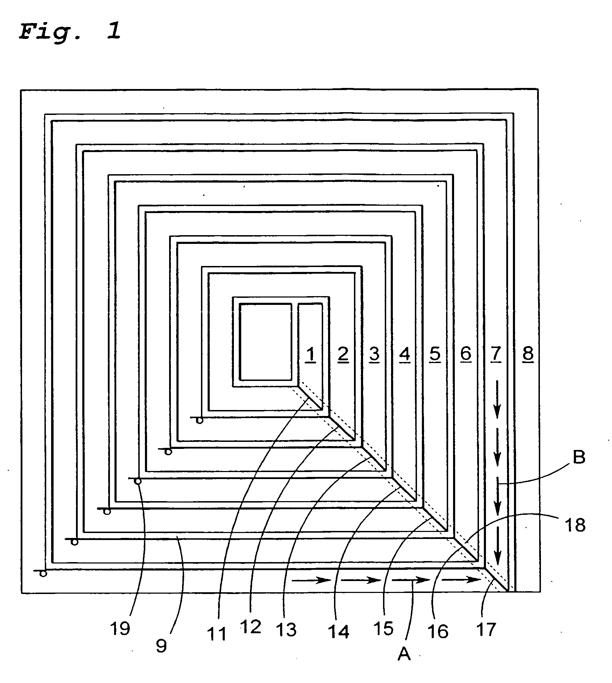

A fish culturing plant according to the invention is illustrated in a view from above in fig 1. The basin of the plant is in the example shown of a substantially square shape with a side of approx. 100 m. A helix-like running wall 9 forms a helix-like running canal in the plant. By a number of transverse walls 11-17 which connect two adjacent turns of the helix-like running wall 9 with each other, the canal is divided into a number of sections 1-8. The distance between two adjacent turns of the helix-like running wall 9 is substantially constant, approx. 5-7,5 m. Thereby, the different sections will be of an increasing volume, from within and outward. The helix-like running wall 9 has on the upper side thereof a width which is sufficient to form a footway. The depth of the basin is approx. 3 m.

In each transverse wall 11-17, a shutter is arranged which might uncover an opening in order to establish communication between adjacent sections. The openings provided with shutters and the function thereof is described in more detail further down.

Under the basin, a service tunnel 18 extends in which devices requisite for the maintenance of the plant are constructed. These devices comprise, among other things, a pumping station by means of which water may be pumped into and out of each section individually. Furthermore, there are filtration and purification devices. With the arrows A, it is illustrated how clean water is pumped in and with the arrows B it is illustrated how unclean is pumped out. All refuse is filtered and is taken care of so that the surroundings are protected from pollutants. Maintenance devices also comprise devices for adjustment of the quality and the temperature of the water so that it may be adapted individually for each section of the respective age group.

In each section, there is a foddering shutter 19 for feeding of the fishes that are cultured in the plant. This is described in more detail further down.

In the basin, fishes are cultured divided into different age groups. In the innermost section 1, fertilized roe or fry are put out. In the next section 2, fishes of a somewhat older age group are cultured and in yet the next section 3, fishes of a yet older age group are cultured etc. The eldest age group is thus cultured in the outermost section 8, from where the fishes are taken out as edible fish when ready-grown. When fishes have been cultured a certain time in a section and grown so that they are mature to be transferred to the one being situated closest outside, the shutter between these two sections is opened so that transfer may take place.

The total the length of the canal is approx. 1600 m, but thanks to the helical shape thereof, the plant become very compact and may even be located in densely populated areas. The compact design makes it fairly easy to embody the plant in a housing so that it become secluded from the air and water of the surroundings. Thereby, the fish is protected from natural and unnatural catastrophes such as diseases, toxins and sabotage.

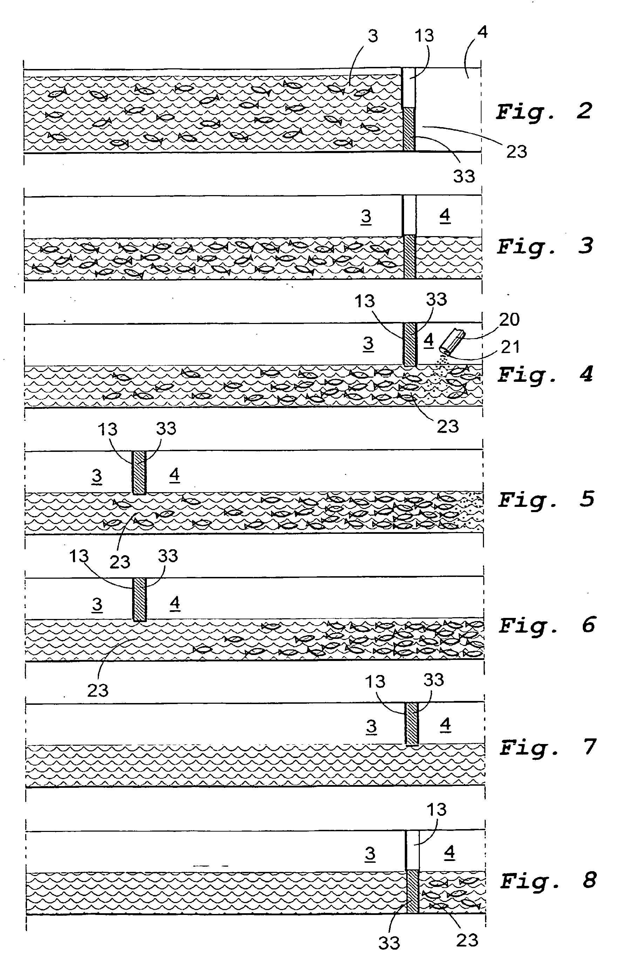

In fig 2, two adjacent sections, e.g. the sections 3 and 4, are shown in a longitudinal section through the canal. The sections 3, 4 are separated by the transverse wall 13, which at the bottom has an opening 23. The opening 23 is in the position shown in fig 2 closed by a shutter 33. The shutter 33 may be displaced upwards in the transverse wall 13 so that the opening 23 is uncovered. In the innermost 3 of the two sections, there are fishes of an age group that is mature to be transferred to the section 4 being situated outside. Conveniently, some time has elapsed since the fishes were last fed so that they will be fairly hungry.

When this is to take place, you first assure yourself that section 4 is evacuated of fishes by the fishes that previously occupied it having been transferred to section 5. Thereupon, water is pumped away from section 4 so that it becomes emptied, whereupon it is conveniently cleaned. By means of cleaning between each batch of fish cultured in a section, the risk of diseases is diminished.

The next step is to pump water from section 3 to section 4 so that the water levels are equalized, which is illustrated in fig 3.

Then the shutter 33 is pushed up in the transverse wall 13 so that the opening 23 is uncovered, which is shown in fig 4. The fishes then are enabled to swim into section 4. In order to entice them to do so, feeding is effected in the proximity of the transverse wall 13 of section 4. This is effected through the mouth 21 of a feeder pipe 20 that is movable, extending from the foddering shutter 19, see fig 1.

Therefore, the hungry fishes swim into section 4, which is illustrated in figs 5 and 6. In order to entice the fishes to swim far into section 4, the mouth of the feeder pipe 20 is moved farther on into section 4.

In fig 7 is illustrated how all fishes have swum into section 4 and the feeding is effected in the farthest end of the same. Now the transfer is completed and the shutter 33 is displaced downwards in order to once again shut the opening 23, which is illustrated in fig 8.

Now section 3 may be drained of water and cleaned. Then, section 3 is ready to receive fishes from section 2.

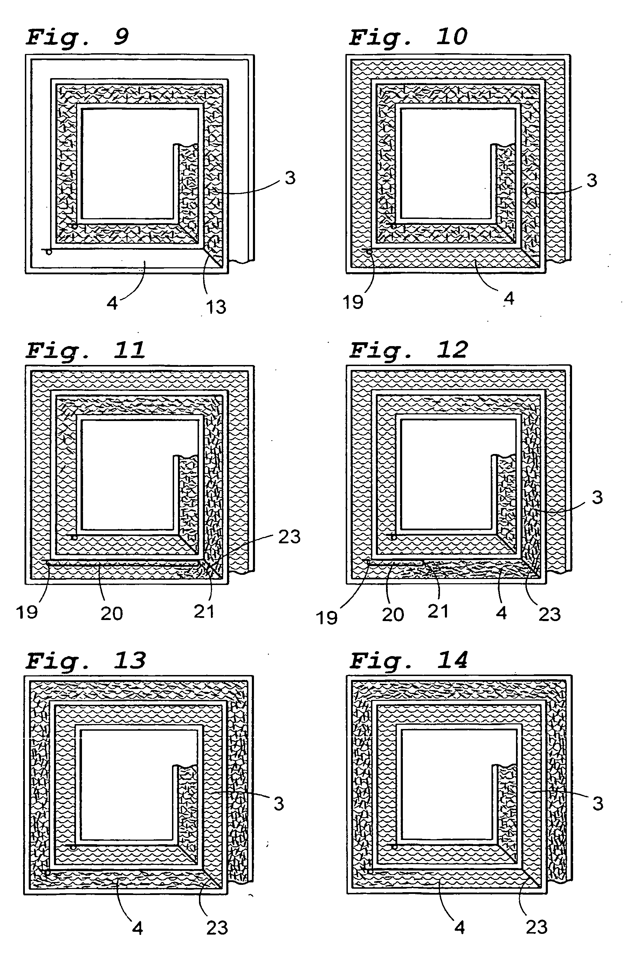

The course described in connection with figs 2-8 is also illustrated in views from above in figs 9-15.

Figs 9 and 10 illustrate the sections 3 and 4 in the position shown in figs 2 and 3, i.e. when all fish is still left in section 3.

In fig 11, the shutter has been drawn up and the fishes are fed through the mouth 21 of the feeder pipe 20 positioned up against the transverse wall 13. In fig 12, some of the fishes have swum into section 4. The mouth 21 of the feeder pipe is moved farther into the section in order to entice the fishes farther into the section and enable oncoming fishes to enter.

In figs 13 and 14, all fishes have swum into the section 4 and the mouth of the feeder pipe is continuously moved towards the farthest end of the section.

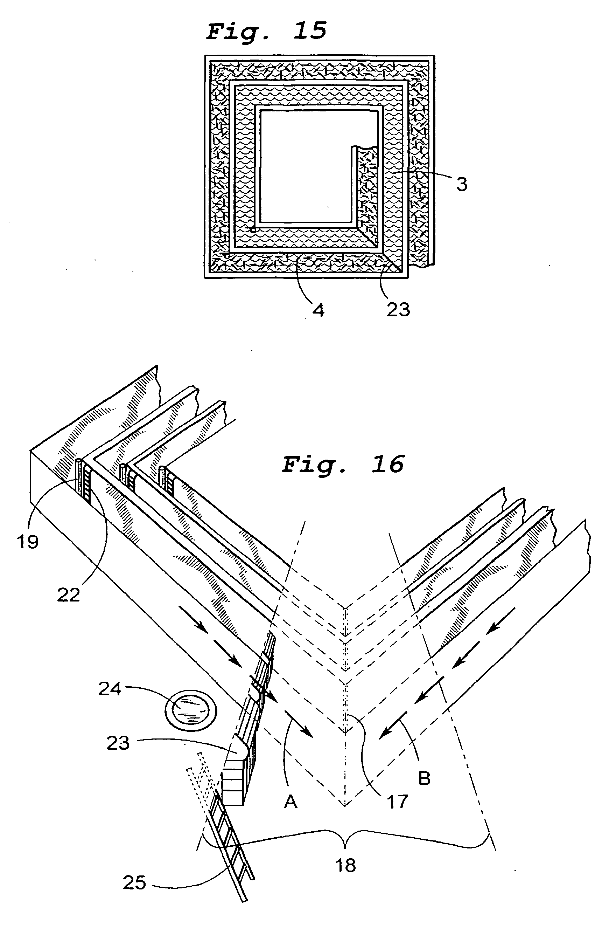

In fig 15, the opening between the sections 3 and 4 has been closed and the position corresponding to the one in fig 8 has been reached.

Fig 16 illustrates some details of the plant. The foddering shutter 19 through which the feeder pipe may be led is hermetical. A ladder 22 is provided in order to enable climbing down in the respective section. The service tunnel 18 is provided with a treatment unit 23 in each section. The treatment unit 23 comprises, among other things, water filter, oxygen feeder, water cooler and water pump. An impermeable shutter 24 enables the opportunity of via a ladder 25 climbing down from the basin to the service tunnel 18.

In the figure is furthermore illustrated how water being dirty and deficient in oxygen as is shown with arrow B is sucked out from the end of a section, in this case section 7 in order to undergo a treatment comprising, among other things, filtration, cooling, oxygenating, sampling etc. Thereupon, the treated water as is shown with arrow A may be pumped into section 8 or back to section 7.

The service tunnel 18 is situated under the basin and secluded therefrom so that machinery, electric installation, telecommunication equipment are protected and so that staff members may stay in the tunnel. The transverse walls with the shutters are all situated directly above the tunnel, which in a simple way enables the manoeuvring of the shutters by means of the machinery or manually.

The helix-like running wall 9 may be a double-wall with a space between the wall layer of approx. 0,5 m, whereby service personnel may move around therein. A number of basins may be constructed on top of each other.

In the present application, the invention is described related to fish. However, in the present application, it will be appreciated that fish includes all types of aquatic animals that may be used as food for people and animals, e.g. shrimps and other shellfish.

## Claims

1. Fish culturing plant comprising a basin having a number of sections (1-8) wherein adjacent sections are delimited from each other by means of partition walls (9, 11-17), and sealable openings (23) are arranged in the partition walls so that adjacent sections are connectable with each other, **characterized in that** the sections are arranged after each other in a helix-like pattern in a number of turns, that the partition walls (9, 11-17) comprise a helix-like running wall (9) as well as a number of transverse walls (11-17), each transverse wall (11-17) running between two adjacent turns of the helix-like running wall (9), that the openings (23) are arranged in the transverse walls (11-17) that the plant is provided with a foddering appliance (19-21) comprising a number of foddering positions (21) where at least some dispensing spots are so arranged that dispensing of fodder is effected in the vicinity of each transverse wall (11-17), that the plant comprises a housing encompassing the basin so that it is secluded from the air and water of the surroundings and that the plant comprises a service tunnel (18) extending under the basin, in which tunnel a pumping station for the pumping of water in and out of each section (1-8) individually, the inlet and outlet (A, B) of a section (1-8) being situated at each end of the section, maintenance devices for the adjustment of quality and temperature of the water in each section (1-8) individually and filtration and purification devices are arranged.

2. Fish culturing plant according to claim 1, **characterized in that** the sections (1-8) are of different volume with an increasing volume seen in the helical direction from within and outward.

3. Fish culturing plant according to any one of claims 1-2, **characterized in that** each sealable opening (23) is arranged in the lower half of the transverse wall (11-17) and that it is sealable by means of a vertically movable shutter (33).

4. Method for culturing fish wherein the fishes are cultured in a basin having a number of sections where adjacent sections are delimited from each other by means of partition walls, and sealable openings are arranged in the partition walls so that adjacent sections are connectable with each other, fishes of different age groups being present in different sections, and fishes of one age group being transferred from one section to an adjacent section by setting the interjacent opening in open position, **characterized in that** the fishes are kept in sections that are arranged consecutively in a helix-like pattern in several turns, that the fishes are transferred from one section to an adjacent section by opening an opening in a transverse wall interconnecting two adjacent turns of the helical walls of the sections, the fishes being induced to pass the respective opening by supplying fodder in the vicinity of the opening, that the basin is contained in a housing so that it is secluded from surrounding air and water, that water is pumped out and in individually in each section with a pumping station arranged in a service tunnel situated under the basin, the water being pumped in at one end of a section and out from the other end of the section, that the quality and temperature of the water is adjusted in each section individually by means of maintenance devices situated in the service tunnel and that the water is filtered and purified.

5. Method according to claim 4, **characterized in that** the sections are of different volume with increasing volume seen in the helical direction from within and outward, fishes of the youngest age group being cultured in the innermost section and fishes of different age groups being cultured in the sections being situated outside where the age of each group increases from one section to the one being situated closest outside and the openings being normally closed and fishes in one section after a certain time being transferred to the one being situated closest outside by setting the opening in the interjacent transverse wall in an open position in order to be closed when the transfer is completed.

6. Method according to claim 5, **characterized in that** each opening is arranged in the lower half of the transverse wall and that the opening is opened by means of displacing a shutter uppwards.

7. Method according to claim 6, **characterized in that** transfer of fishes from one section to the section being situated closest outside comprises the steps of:
- water in the section being situated outside being pumped away so that it becomes substantially empty,
- water being pumped from said one section to said section being situated closest outside,
- the opening being opened
- the fishes being induced to swim through the opening,
and that the opening is closed.

## Patentansprüche

1. Eine Fischzuchtanlage, die aus einem Becken mit mehreren Sektionen (1-8) besteht, in dem die benachbarten Sektionen mittels Trennwänden (9, 11-17) voneinander getrennt sind. In den Trennwänden befinden sich verschließbare Öffnungen (23), damit die benachbarten Sektionen miteinander verbunden werden können. Diese Fischzuchtanlage wird **dadurch charakterisiert,** dass die Sektionen in dem Becken in einem spiralenförmigen Muster hintereinander angeordnet sind; dass die Trennwände (9, 11-17) eine spiralenartige fortlaufende Wand (9) sowie eine Reihe von Querwänden (11-17) bilden; dass jede Querwand (11-17) zwischen zwei benachbarten Windungen in der spiralenartig verlaufenden Trennwand (9) liegt; dass die Öffnungen (23) in den Querwänden (11-17) angeordnet sind; dass die Anlage mit einer Futtervorrichtung (19-21) ausgestattet ist, die aus mehreren Futterstellen (21) besteht, wobei wenigstens einige dieser Futterspender so angeordnet sind, dass das Futter in der Nähe der einzelnen Trennwände (11-17) ausgebracht wird; dass das Becken komplett von einer Einhausung umgeben ist, damit es von der Luft und dem Wasser aus der Umgehung abgeschottet ist; dass die Anlage einen Wartungstunnel (18) enthält, der unter dem Becken verläuft und in dem sich eine Pumpstation befindet, um Wasser in und aus den einzelnen Sektionen (1-8) zu pumpen; dass sich Zulauf und Ablauf (A, B) einer Sektion (1-8) an den gegenüberliegenden Enden jeder Sektion befinden und dass sich in dem Tunnel außerdem Wartungsgeräte zur individuellen Regulierung der Qualität und der Temperatur des Wassers in jeder Sektion (1-8) sowie Filter- und Wasseraufbereitungsvorrichtungen befinden.

2. Fischzuchtanlage gemäß Anforderung 1, die **dadurch charakterisiert** wird, dass die Sektionen (1-8) ein unterschiedliches Volumen besitzen. Dabei nimmt das Volumen der Sektionen in der Spirale von innen nach außen zu.

3. Ein Fischauchtanlage gemäß den Anforderungen 1 bis 2, die **dadurch charakterisiert** wird, dass jede verschließbare Öffnung (23) in der unteren Hälfte der Trennwände (11-17) angeordnet ist und sich mittels einer vertikal verschiebbaren Schließvorrichtung (33) abschotten lässt.

4. Fischzuchtmethode, bei der die Fische in einem Becken gezüchtet werden, das aus mehreren Sektionen besteht, wobei die benachbarten Sektionen mittels Trennwänden voneinander getrennt sind. In den Trennwänden befinden sich verschließbare Öffnungen, um die benachbarten Sektion miteinander verbinden zu können. In den unterschiedlichen Sektionen befinden sich Fische unterschiedlicher Altersgruppen. Fische einer Altersgruppe werden von einer Sektion in eine benachbarte Sektion transferiert, indem die dazwischenliegende Öffnung geöffnet wird. Diese Fischzuchtmethode wird **dadurch charakterisiert,** dass die Fische in spiralenförmig hintereinander angeordneten Sektionen mit mehreren Windungen gehalten werden; dass die Fische von einer Sektion in die benachbarte Sektion transferiert werden, indem eine Öffnung in der Querwand geöffnet wird, die zwei benachbarte Windungen der spiralenförmig verlaufenden Wand zwischen diesen beiden Sektionen miteinander verbindet; dass die Fische verleitet werden, durch die jeweilige Öffnung zu schwimmen, indem Futter in der Nähe der Öffnung ausgebracht wird; dass das Becken komplett mit einer Einhausung umschlossen ist, damit es von der Luft und dem Wasser der Umgebung abgeschottet ist; dass das Wasser mit einer Pumpstation aus den einzelnen Sektionen gepumpt wird, die sich in einem Wartungstunnel unter dem Becken befindet; dass das Wasser an einem Ende der Sektion abgepumpt und am anderen Ende der Sektion hineingepumpt wird; dass die Qualität und die Temperatur des Wassers in jeder Sektion mittels Wartungsgeräten im Servicetunnel individuell reguliert werden und dass das Wasser gefiltert und aufbereitet wird.

5. Methode gemäß Anforderung 4, die **dadurch charakterisiert** wird, dass die Sektionen der Spirale von innen nach außen an Volumen zunehmen; dass die Fische der jüngsten Altersgruppe in der innersten Sektion gezüchtet werden und dass die Fische mit zunehmenden Alter immer weiter nach außen in der Spirale wandern; dass die Öffnungen zwischen den Sektionen für gewöhnlich geschlossen sind und dass die Fische nach einer gewissen Zeit in die nächste weiter außen liegende Sektion transferiert werden, indem die Öffnung in der dazwischenliegenden Querwand geöffnet und nach dem Transfer wieder verschlossen wird.

6. Methode gemäß Anforderung 5, die **dadurch charakterisiert** wird, dass jede Öffnung in der unteren Hälfte der Querwand angeordnet ist und dass die Öffnung durch Verschieben der Schließvorrichtung nach oben geöffnet wird.

7. Methode gemäß Anforderung 6, die **dadurch charakterisiert** wird, dass der Transfer der Fische aus einer Sektion in die nächste weiter außen gelegene Sektion folgende Schritte umfasst:
- das Wasser in der weiter außen gelegenen Sektion wird abgepumpt, damit sie im Wesentlichen leer ist;
- das Wasser wird von der besagten Sektion in die nächste weiter außen gelegene Sektion gepumpt,
- die Öffnung wird geöffnet;
- die Fische werden verleitet, durch die Öffnung zu schwimmen, und die Öffnung wird wieder verschlossen.

## Revendications

1. Exploitation piscicole comprenant un bassin possédant plusieurs sections (1-8) dans lequel les sections adjacentes sont délimitées les unes par rapport aux autres au moyen de cloisons (9, 11-17), et des ouvertures scellables (23) sont disposées dans les cloisons de sorte que les sections adjacentes puissent être reliées les unes aux autres, **caractérisée en ce que** les sections sont disposées l'une après l'autre en une configuration en hélice en plusieurs tours, **en ce que** les cloisons (9, 11-17) comprennent une paroi continue en hélice (9) ainsi que plusieurs parois transversales (11-17), chaque paroi transversale (11-17) s'étendant entre deux tours adjacents de la paroi continue en hélice (9), **en ce que** les ouvertures (23) sont disposées dans les parois transversales (11-17), **en ce que** l'exploitation est pourvue d'un appareil de fourrage (19-21) comprenant plusieurs positions de fourrage (21) où au moins quelques points de distribution sont disposés de manière à ce que la distribution du fourrage s'effectue à proximité de chaque paroi transversale (11-17), **en ce que** l'exploitation comprend une enveloppe renfermant le bassin de sorte qu'il soit isolé de l'air et de l'eau des environs et **en ce que** l'exploitation comprend un tunnel d'entretien (18) s'étendant sous le bassin, tunnel dans lequel sont disposés une station de pompage pour le pompage d'eau dans et hors de chaque section (1-8) individuellement/l'orifice d'admission et l'orifice d'évacuation (A, B) d'une section (1-8) se trouvant à chaque extrémité de la section, des dispositifs de maintenance pour le réglage de la qualité et de la température de l'eau dans chaque section (1-8) individuellement et des dispositifs de filtrage et de purification.

2. Exploitation piscicole suivant la revendication 1, **caractérisée en ce que** les sections (1-8) sont de volume différent, le volume allant croissant dans le sens hélicoïdal depuis l'intérieur et vers l'extérieur.

3. Exploitation piscicole suivant l'une quelconque des revendications 1 et 2, **caractérisée en ce que** chaque ouverture scellable (23) est disposée dans la moitié inférieure de la paroi transversale (11-17) et **en ce qu'**elle peut être scellée au moyen d'un volet d'obturation mobile dans le sens vertical (33).

4. Procédé de pisciculture dans lequel les poissons sont élevés dans un bassin possédant plusieurs sections dans lequel les sections adjacentes sont délimitées les unes par rapport aux autres au moyen de cloisons, et des ouvertures scellables sont disposées dans les cloisons de sorte que les sections adjacentes puissent être reliées les unes aux autres, des poissons de classes d'âge différentes se trouvant dans des sections différentes, et des poissons d'une classe d'âge étant transférés d'une section vers une section adjacente en mettant l'ouverture intermédiaire dans la position ouverte, **caractérisé en ce que** les poissons sont conservés dans des sections qui sont disposées consécutivement en une configuration en hélice en plusieurs tours, **en ce que** les poissons sont transférés d'une section vers une section adjacente en ouvrant une ouverture dans une paroi transversale reliant entre eux deux tours adjacents des parois hélicoïdales des sections, les poissons étant amenés à franchir l'ouverture respective en fournissant du fourrage à proximité de l'ouverture, **en ce que** le bassin est contenu dans une enveloppe de sorte qu'il soit isolé de l'air et de l'eau environnants, **en ce que** l'eau est pompée hors et dans chaque section individuellement au moyen d'une station de pompage disposée dans un tunnel d'entretien situé sous le bassin, l'eau étant pompée vers l'intérieur à une extrémité d'une section et vers l'extérieur depuis l'autre extrémité d'une section, **en ce que** la qualité et la température de l'eau sont réglées dans chaque section individuellement au moyen de dispositifs de maintenance situés dans le tunnel d'entretien et **en ce que** l'eau est filtrée et purifiée.

5. Procédé suivant la revendication 4, **caractérisé en ce que** les sections sont de volume différent, le volume allant croissant dans le sens hélicoïdal depuis l'intérieur et vers l'extérieur, les poissons de la classe d'âge inférieure étant élevés dans la section le plus à l'intérieur et les poissons de classes d'âge différentes étant élevés dans les sections situées à l'extérieur où l'âge de chaque classe augmente d'une section à celle située le plus près à l'extérieur et les ouvertures étant normalement fermées et les poissons dans une section étant transférés après un certain temps vers la section située le plus près à l'extérieur en mettant l'ouverture dans la paroi transversale intermédiaire dans une position ouverte afin d'être fermée lorsque le transfert est terminé.

6. Procédé suivant la revendication 5, **caractérisé en ce que** chaque ouverture est disposée dans la moitié inférieure de la paroi transversale et **en ce que** l'ouverture s'ouvre en déplaçant un volet d'obturation vers le haut.

7. Procédé suivant la revendication 6, **caractérisé en ce que** le transfert de poissons d'une section vers la section située le plus près à l'extérieur comprend les étapes suivantes:
- l'eau dans la section se trouvant à l'extérieur étant évacuée par pompage de sorte qu'elle devienne pratiquement vide ;
- l'eau étant pompée de ladite section vers ladite section située le plus près à l'extérieur ;
- l'ouverture étant ouverte ;
- les poissons étant amenés à nager à travers l'ouverture, et **en ce que** l'ouverture est fermée.
